# EUROPEAN PATENT SPECIFICATION

(11) **EP 3 021 681 B1**
(45) Date of publication and mention of the grant of the patent: **13.02.2019**
(21) Application number: 14730937.1
(22) Date of filing: 18.06.2014
(51) Int. Cl.: A23G 3/02, A23G 3/12, A23G 3/56, A23G 7/00, B30B 11/12, B25J 15/00

(54) **METHOD AND APPARATUS TO FORM A FLAT LOLLIPOP**
VERFAHREN UND VORRICHTUNG ZUR HERSTELLUNG EINES FLACHEN LUTSCHERS
PROCÉDÉ ET APPAREIL POUR FORMER UNE SUCETTE PLATE

(30) Priority: 16.07.2013 EP 13176602
(43) Date of publication of application: 25.05.2016
(73) Proprietor: GEA Food Solutions Weert B.V., 6006 RV Weert (NL)
(72) Inventor: BAUMEISTER, Bruno Gerfried, 52078 Aachen (DE)
(74) Representative: Kutzenberger Wolff & Partner
(86) International application number: PCT/EP2014/062871
(87) International publication number: WO 2015/007452

(56) References cited:
- WO-A1-97/46113
- WO-A1-03/043436
- WO-A1-2007/121930
- WO-A2-2005/041679
- WO-A2-2006/136394
- DE-A1- 4 128 905
- GB-A- 2 388 007
- US-A- 3 285 199
- US-A- 4 159 612
- US-A1- 2012 171 335

## Description

The present invention relates to a method to produce a lollipop with a flat lollipop head, wherein a mass is formed into a flat lollipop head in a forming apparatus into which a stick is inserted, wherein the lollipop is handed over to transportation means with grippers, which grip the stick of the lollipop and transfer the lollipop away. The present invention further relates to a forming device with a forming apparatus which comprises moulds to form a flat lollipop, which is subsequently handed over and transported by a transportation system with grippers.

Machines to produce lollipops are for example disclosed in US 3 285 199, GB 2 388 007 A, US 4 159 612 A and WO 03/043436 A1. Flat lollipops, i.e. lollipops with a lollipop head which is much larger in two directions than in a third direction and which are in general moulded from a warm sugar mass, tend to deform during transportation, which is undesirable.

It was therefore the objective of the present invention to provide a method and a forming apparatus which do not comprise the deficiencies according to the state of the art.

This problem is solved with a method to produce a lollipop with a flat lollipop head according to claim 1.

The disclosure regarding this embodiment of the present invention also applies to the other inventions and vice versa.

The present invention relates to a method to produce a lollipop with a flat lollipop head. A lollipop with a flat lollipop head according to the present invention is three-dimensional, wherein one dimension is smaller than the two others which are arranged in one plane. A flat lollipop is not rotationally symmetric. The head of the lollipop is normally moulded from a sugar mass in a mould. The mould is often part of a rotating drum, wherein the drum comprises a multitude of moulds. During or after the moulding of the lollipop head, a stick is inserted into the not yet solidified sugar mass. Subsequently, the lollipop is handed over to transportation means with grippers, which grip the stick of the lollipop and transfer the lollipop away. This transportation means is, for example, a rotating wheel and/or a rotating chain, belt or the like.

Preferably, during handover of the lollipops from the forming apparatus to the transportation means and during transportation, the stick does not rotate relative to the grippers. This assures that the head of the lollipop is always in well-defined position particularly relative to the gravitational force of the earth. This limits or avoids deformation of the lollipop during transportation.

According to the present invention, the lollipop comprises a main extension in the x- and y-direction; the lollipop is transported by a transportation chain with the x- and y-direction parallel to a horizontal plane.

The disclosure regarding this embodiment of the present invention also applies to the other inventions and vice versa.

Due to horizontal orientation of the lollipop head, deformation of the lollipop head is at least limited.

Preferably, the lollipops are removed from the more preferably rotating forming apparatus by a transfer wheel. This transfer wheel is located at the circumference of the forming apparatus and preferably rotates around an axis which is different from the axis of rotation of the forming apparatus. The forming apparatus and transfer wheel preferably rotate in opposite directions.

The transfer wheel preferably comprises a multitude of grippers, more preferably at its circumference.

The lollipops are preferably handed over from the transfer wheel to a transportation chain. This chain preferably rotates around two sprockets and more preferably rotates in the same direction as the forming apparatus. Attached to the chain are a multitude of grippes, wherein each gripper can grip the stick of a lollipop.

Preferably, the lollipops are handed over to the gripper of the chain, while the respective gripper is in the vicinity of the sprocket, more preferably, while the part of the chain to which the gripper is attached is in contact with the sprocket.

After the handover and during transportation, the stick of the lollipop is always clamped by a gripper such that the lollipop cannot rotate. Preferably, the gripper comprises means that deform the stick elastically or plastically so that the moment of momentum needed to rotate the respective lollipop is increased. Alternatively or additionally, the gripper may comprise means to increase the friction coefficient between the stick of the lollipop and the gripper.

According to a preferred embodiment of the present invention, temporarily each stick is gripped by two grippers, one being connected to the transfer wheel and one being connected to the transportation chain. This assures that the stick of the lollipop cannot rotate at any time during the transfer from the transfer wheel to the chain.

Another embodiment of the present invention is a forming device with a forming apparatus which comprises moulds to form a flat lollipop, which is subsequently handed over and transported by a transportation system with grippers, wherein each gripper comprises form- and/or force-fit means which avoid a rotation of a stick of the lollipop relative to the gripper.

The disclosure regarding this embodiment of the present invention also applies to the other inventions and vice versa.

Preferably, the forming comprises a transfer wheel with grippers, wherein each gripper comprises an inner and an outer arm, which are both in contact with the stick of the lollipop but in different axial locations.

Preferably, the lollipops are handed over from the transfer wheel to a transportation chain with grippers, wherein each gripper comprises gripping means, which, during take over, are inserted between the inner and an outer arm of the gripper at the transfer wheel.

The inventions are now explained according to figures 1 - 4. These explanations do not limit the scope of protection of the present invention and apply to each embodiment of the present invention likewise.
- **Figure 1**: shows a lollipop with a flat lollipop head.
- **Figure 2**: shows the inventive forming device.
- **Figure 3**: shows the handover from the forming apparatus to the transfer wheel.
- **Figure 4**: shows the handover from the transfer wheel to the transportation chain.

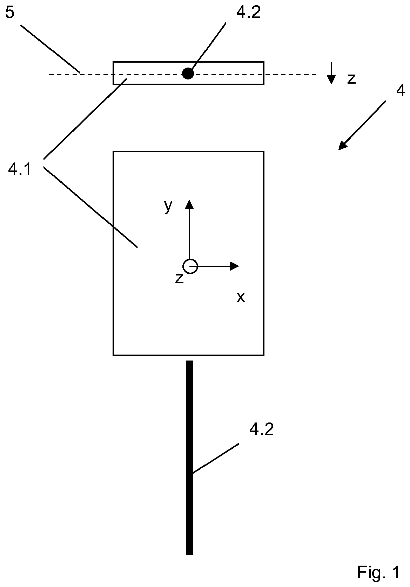

Figure 1 shows a lollipop 4 with a flat lollipop head in two different views. As can be particularly seen from the lower view, the lollipop comprises a lollipop head 4.1, which is in the present case rectangular. The lollipop is here made from a sugar-mass. A stick 4.2 is inserted into the head 4.1 of the lollipop. The lollipop comprises two main extensions in the x- and y-direction which are both located in one plane. As can be particularly seen from the upper view, the lollipop's extension in the z-direction, which is perpendicular to the x- and y-direction, is much smaller than its extension in the x- and y-direction, so that the lollipop has a flat appearance.

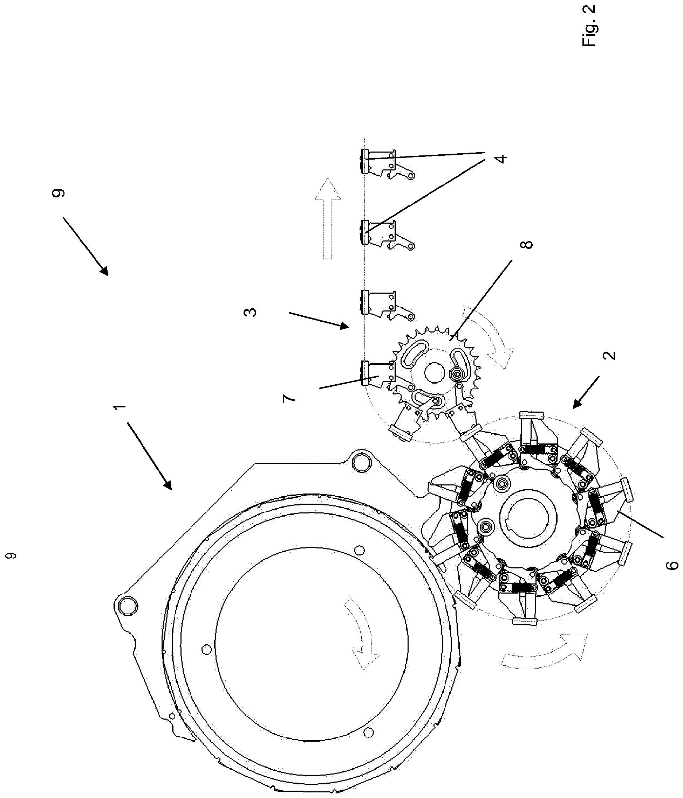

Figure 2 shows the inventive lollipop forming device 9. This forming device comprises a forming apparatus 1, in the present case a forming drum, which rotates here clockwise. At its circumference, the forming apparatus comprises a multitude of moulds in which the lollipop head is molded into its flat shape from a sugar mass strand. As can be also seen, the forming apparatus comprises stick insertion means, which insert the stick into the not yet solidified sugar mass. In an exit position, here approximately the 5 o'clock position, the moulds are opened and the stick of the lollipop is gripped by a gripper 6, which is attached to a rotating transfer wheel 2, which rotates in the present case counterclockwise. According to the present invention, the lollipop is removed from the forming apparatus such that it does not rotate relative to the gripper. This means, for example, that the sticks of the lollipops are gripped in an instant, while they or the head of the lollipop are still, at least partially, in a form- and/or force-fit connection with the forming apparatus so that they cannot rotate before the stick is fixed by the gripper. The take-over of the lollipops from the forming apparatus by transfer wheel is much more exact than the take over by a chain or a chain-wheel. After the gripped lollipop has been rotated from an approximately 11 o'clock position counterclockwise to an approximately 2 o'clock position, the lollipop is handed over to a gripper 7, which is connected to an endless chain which rotates clockwise driven and/or guided by a sprocket 8. Again, the handover of the stick of the lollipop is executed such that the stick does not rotate relative to the gripper. During the handover of the lollipop from the transfer wheel 2 to the grippers of the chain 3, this is executed by fixing the stick of the lollipop simultaneously by two grippers 6 and 7, before the gripper 6 is opened and thus releases the stick of the lollipop. As can be also seen from figure 2, the chain transports the lollipops with a horizontally oriented lollipop head. This orientation at least minimizes the deformation of the lollipop during transportation. Deformation of the lollipop head can take place because the lollipop heads, which are made from a sugar mass, are not yet solidified sufficiently.

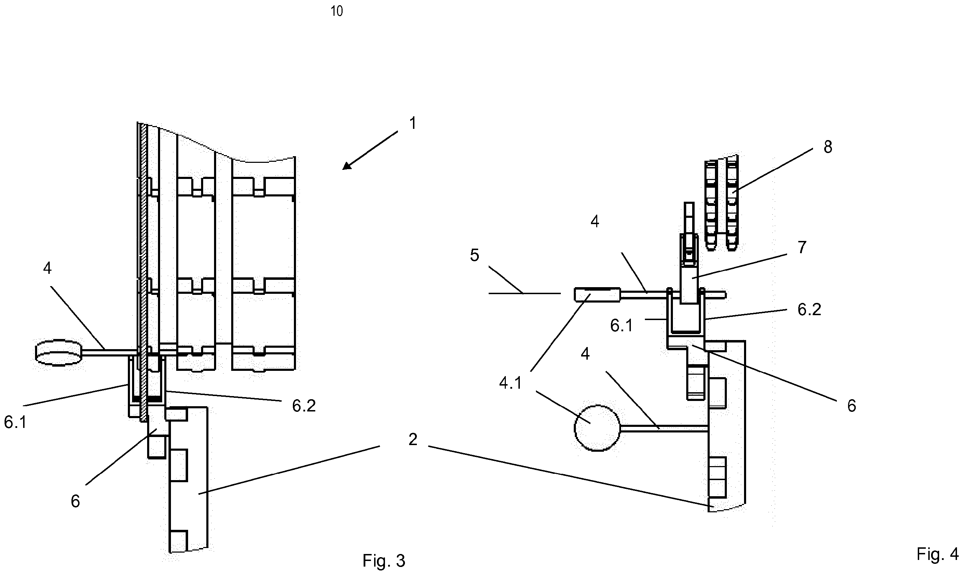

Figure 3 shows the transfer wheel 2 and one gripper 6. It can be clearly seen that each gripper comprises an inner and an outer arm 6.1, 6.2, which grip the lollipop at two axially displaced contact locations. This improves the transport stability of the lollipops during transportation. As can be also seen from figure 3, the forming apparatus here the forming drum comprises a groove into which the outer arm 6.2 of the gripper can be inserted to grip the stick of the lollipop.

Figure 4 shows the handover situation of the lollipop from the transfer wheel 2 to the gripper 7 of the chain 3. It can be seen that during a short period of time during handover, the stick of the lollipop is simultaneously gripped by the arms of gripper 7 and of gripper 6, before the gripper 6 releases the stick of the lollipop. This assures that the lollipop stick does not rotate during the handover of the lollipop from the transfer wheel to the transportation chain.

The entire forming device is constructed and synchronized such that the lollipop heads are transported horizontally in order to minimize their deformation during transportation.

### List of reference signs:

- 1: forming apparatus
- 2: transfer wheel
- 3: transportation chain
- 4: flat lollipop
- 4.1: lollipop head
- 4.2: lollipop stick
- 5: horizontal plane
- 6: gripper at the transfer wheel
- 6.1: inner arm
- 6.2: outer arm
- 7: gripper at the chain
- 8: sprocket
- 9: forming device
- x: extension in the x-direction of the lollipop
- y: extension in the y-direction of the lollipop
- z: extension in the z-direction of the lollipop

## Claims

1. Method to produce a lollipop (4) with a lollipop head (4.1), wherein a mass is formed into a flat lollipop head (4.1) in a forming apparatus (1) into which a stick (4.2) is inserted, wherein the lollipop is handed over to transportation means (2, 3) with grippers (6, 7), which grip the stick (4.2) of the lollipop and transport the lollipop away, **characterized in that** the lollipop head (4.1) is much larger in two dimensions, the x- and y-direction, than in a third dimension, the z-dimension and that the lollipop is transported by a transportation chain with the x- and y-direction parallel to a horizontal plane, wherein after handover and during transportation, the stick of the lollipop is always clamped by a gripper such that the lollipop cannot rotate.

2. Method according to claim 1, **characterized in that**. during handover of the lollipops from the forming apparatus (1) to the transportation means (2, 3) and during transportation, the stick (4.2) does not rotate relative to the grippers (6, 7).

3. Method according to one of the preceding claims, **characterized in that** the lollipops are removed from the forming apparatus by a transfer wheel (2).

4. Method according to claim 3, **characterized in that** the lollipops are handed over from the transfer wheel to a transportation chain.

5. Method according to one of the preceding claims, **characterized in that** temporarily each stick is gripped by two grippers (6, 7), one being connected to the transfer wheel and one being connected to the transportation chain.

6. Forming device (9) with a forming apparatus (1) which comprises moulds to form a flat lollipop, which is subsequently handed over and transported by a transportation system with grippers (6, 7), wherein each gripper comprises form- and/or force-fit means which avoid a rotation of a stick of the lollipop relative to the gripper (6, 7), , **characterized in that** it comprises a transfer wheel (2) with grippers (6), wherein each gripper comprises an inner and an outer arm (6.1, 6.2) which are both in contact with the stick of the lollipop but in different axial locations.

7. Forming device (9) with a forming apparatus (1) according to claim 7, **characterized in that** the lollipops are handed over from the transfer wheel to a transportation chain (3) with grippers (7), wherein each gripper comprises gripping means, which, during take over, are inserted between the inner and an outer arm (6.1, 6.2) of the gripper 6 at the transfer wheel (2).

## Patentansprüche

1. Verfahren zum Herstellen eines Lutschers (4) mit einem Lutscheroberteil (4.1), wobei eine Masse in einer Formeinrichtung (1) zu einem flachen Lutscheroberteil (4.1) geformt wird, in den ein Stiel (4.2) eingeführt wird, wobei der Lutscher Transportmitteln (2, 3) mit Greifern (6, 7) übergeben wird, die den Stiel (4.2) des Lutschers greifen und den Lutscher weg transportieren, **dadurch gekennzeichnet, dass** der Lutscheroberteil (4.1) in zwei Dimensionen, der x- und y-Richtung, viel größer ist als in einer dritten Dimension, der z-Dimension, und dass der Lutscher durch eine Transportkette mit der x- und y-Richtung parallel zu einer horizontalen Ebene transportiert wird, wobei nach Übergabe und während des Transports der Stiel des Lutschers stets durch einen Greifer derart eingespannt ist, dass sich der Lutscher nicht drehen kann.

2. Verfahren nach Anspruch 1, **dadurch gekennzeichnet, dass** während der Übergabe der Lutscher von der Formeinrichtung (1) zu den Transportmitteln (2, 3) und während des Transports sich der Stiel (4.2) nicht in Relation zu den Greifern (6, 7) dreht.

3. Verfahren nach einem der vorhergehenden Ansprüche, **dadurch gekennzeichnet, dass** die Lutscher durch ein Transferrad (2) aus der Formeinrichtung entfernt werden.

4. Verfahren nach Anspruch 3, **dadurch gekennzeichnet, dass** die Lutscher von dem Transferrad zu einer Transportkette übergeben werden.

5. Verfahren nach einem der vorhergehenden Ansprüche, **dadurch gekennzeichnet, dass** jeder Stiel zeitweise durch zwei Greifer (6, 7) gegriffen wird, von denen einer mit dem Transferrad verbunden ist und einer mit der Transportkette verbunden ist.

6. Formvorrichtung (9) mit einer Formeinrichtung (1), die Formwerkzeuge zum Formen eines flachen Lutschers umfasst, der nachfolgend an ein Transportsystem mit Greifern (6, 7) übergeben und durch dieses transportiert wird, wobei jeder Greifer form- und/oder kraftschlüssige Mittel umfasst, die eine Drehung eines Stiels des Lutschers in Relation zu den Greifern (6, 7) verhindern, **dadurch gekennzeichnet, dass** sie ein Transferrad (2) mit Greifern (6) umfasst, wobei jeder Greifer einen inneren und einen äußeren Arm (6.1, 6.2) umfasst, die beide in Kontakt mit dem Stiel des Lutschers, jedoch in unterschiedlichen axialen Positionen, sind.

7. Formvorrichtung (9) mit einer Formeinrichtung (1) nach Anspruch 7, **dadurch gekennzeichnet, dass** die Lutscher von dem Transferrad zu einer Transportkette (3) mit Greifern (7) übergeben werden, wobei jeder Greifer Greifmittel umfasst, die, während der Übergabe, zwischen den inneren und einen äußeren Arm (6.1, 6.2) des Greifers 6 an dem Transferrad (2) eingeführt werden.

## Revendications

1. Procédé permettant de produire une sucette (4) dotée d'une tête de sucette (4.1), une masse étant formée en une tête de sucette plate (4.1) dans un appareil de formage (1) à l'intérieur duquel un bâton (4.2) est inséré, la sucette étant transférée à un moyen de transport (2, 3) doté de dispositifs de préhension (6, 7), lesquels saisissent le bâton (4.2) de la sucette et transportent la sucette, **caractérisé en ce que** la tête de sucette (4.1) est beaucoup plus grande dans deux dimensions, à savoir la direction x et la direction y, que dans une troisième dimension, à savoir la dimension z, et **en ce que** la sucette est transportée par une chaîne de transport, la direction x et la direction y étant parallèles à un plan horizontal, le bâton de la sucette étant toujours serré par un dispositif de préhension après le transfert et pendant le transport, de telle sorte que la sucette ne puisse pas tourner.

2. Procédé selon la revendication 1, **caractérisé en ce que**, pendant le transfert de la sucette de l'appareil de formage (1) au moyen de transport (2, 3) et pendant le transport, le bâton (4.2) ne tourne pas par rapport aux dispositifs de préhension (6, 7) .

3. Procédé selon l'une des revendications précédentes, **caractérisé en ce que** les sucettes sont retirées de l'appareil de formage par une roue de transfert (2).

4. Procédé selon la revendication 3, **caractérisé en ce que** les sucettes sont transférées de la roue de transfert à une chaîne de transport.

5. Procédé selon l'une des revendications précédentes, **caractérisé en ce que** chaque bâton est saisi temporairement par deux dispositifs de préhension (6, 7), l'un étant relié à la roue de transfert et l'autre étant relié à la chaîne de transport.

6. Dispositif de formage (9) doté d'un appareil de formage (1) qui comprend des moules pour former une sucette plate, laquelle est ensuite transférée et transportée par un système de transport doté de dispositifs de préhension (6, 7), chaque dispositif de préhension comprenant des moyens d'ajustement par complémentarité de forme et/ou à force qui empêchent une rotation d'un bâton de la sucette par rapport au dispositif de préhension (6, 7), **caractérisé en ce qu'**il comprend une roue de transfert (2) dotée de dispositifs de préhension (6), chaque dispositif de préhension comprenant un bras intérieur et un bras extérieur (6.1, 6.2), lesquels sont tous deux en contact avec le bâton de la sucette mais à des positions axiales différentes.

7. Dispositif de formage (9) doté d'un appareil de formage (1) selon la revendication 7, **caractérisé en ce que** les sucettes sont transférées de la roue de transfert à une chaîne de transport (3) dotée de dispositifs de préhension (7), chaque dispositif de préhension comprenant des moyens de préhension qui, pendant le transfert, sont insérés entre le bras intérieur et un bras extérieur (6.1, 6.2) du dispositif de préhension (6) au niveau de la roue de transfert (2).
